# EUROPEAN PATENT SPECIFICATION

(11) **EP 3 745 303 B1**
(45) Date of publication and mention of the grant of the patent: **07.06.2023**
(21) Application number: 20186286.9
(22) Date of filing: 01.09.2018
(51) Int. Cl.: G06V 40/60

(54) **IMPLEMENTATION OF BIOMETRIC AUTHENTICATION WITH ERROR CONDITION DETECTION AND DISPLAY OF AN ERROR INDICATION**
IMPLEMENTIERUNG DER BIOMETRISCHEN AUTHENTIFIZIERUNG MIT FEHLERZUSTANDSERKENNUNG UND ANZEIGE EINER FEHLERHINWEIS
MISE EN OEUVRE DE L'AUTHENTIFICATION BIOMÉTRIQUE AVEC DÉTECTION DES CONDITIONS D'ERREUR ET AFFICHAGE D'UNE INDICATION D'ERREUR

(30) Priority: 09.09.2017 US 201762556413 P; 11.09.2017 US 201762557130 P; 22.09.2017 DK PA201770712; 22.09.2017 DK PA201770713; 22.09.2017 DK PA201770714; 22.09.2017 DK PA201770715; 02.11.2017 US 201762581025 P; 26.01.2018 WO PCT/US2018/015603; 12.02.2018 US 201815894221; 23.02.2018 US 201815903456; 03.06.2018 US 201862679955 P; 12.06.2018 DK PA201870371; 12.06.2018 DK PA201870370
(43) Date of publication of application: 02.12.2020
(62) Divisional of application: 18830326.7
(73) Proprietor: Apple Inc., Cupertino, CA 95014 (US)
(72) Inventor: VAN OS, Marcel, Cupertino, California 95014 (US); ANTON, Peter, D., Cupertino, California 95014 (US); DEVINE, Lynne, Cupertino, California 95014 (US); DYE, Alan, C., Cupertino, California 95014 (US); MOHSENI, Daamun, Cupertino, California 95014 (US); PAUL, Grant, R., Cupertino, California 95014 (US); DE VRIES, Nathan, Cupertino, California 95014 (US)
(74) Representative: COPA Copenhagen Patents

(56) References cited:
- EP-A1- 3 076 334
- GB-A- 2 500 321
- US-A1- 2014 293 079
- US-A1- 2016 078 281
- US-A1- 2016 294 557

## Description

### FIELD

The present disclosure relates generally to biometric authentication, and more specifically to interfaces and techniques for enrollment and authentication of biometric features.

### BACKGROUND

Biometric authentication, for instance of a face, iris, or fingerprint, using electronic devices is a convenient and efficient method of authenticating users of the electronic devices. Biometric authentication allows a device to quickly and easily verify the identity of any number of users.

### BRIEF SUMMARY

Some techniques for implementing biometric authentication using electronic devices, however, are generally cumbersome. For example, some existing techniques, such as those directed to facial recognition, require a user to almost perfectly align a biometric feature in a same manner during both enrollment and each iteration of authentication. Deviation from the alignment of the biometric feature often results in a false negative result. As a result, a user is, optionally, required to unnecessarily perform multiple iterations of biometric authentication, or is, optionally, discouraged from using the biometric authentication altogether. As another example, some existing techniques rely solely on a two-dimensional representation of a biometric feature. As a result, authentication of a user is, optionally, limited by virtue of a failure to analyze one or more three-dimensional characteristics of the biometric feature and also optionally requires a user to unnecessarily perform additional iterations of biometric authentication. In view of the foregoing drawbacks, existing techniques require more time than necessary, wasting both user time and device energy. This latter consideration is particularly significant in the operation of battery-operated devices. Prior art techniques are, e.g., disclosed in EP 3 076 334 A1 describing a palm vein authentication apparatus, for example, an apparatus that authenticates a person by shooting an image of an intravital vein pattern using near infrared rays. Furthermore, US 2014/293079 A1 describes a method which may determine that a camera is at least partially obstructed, e.g., by dirt.

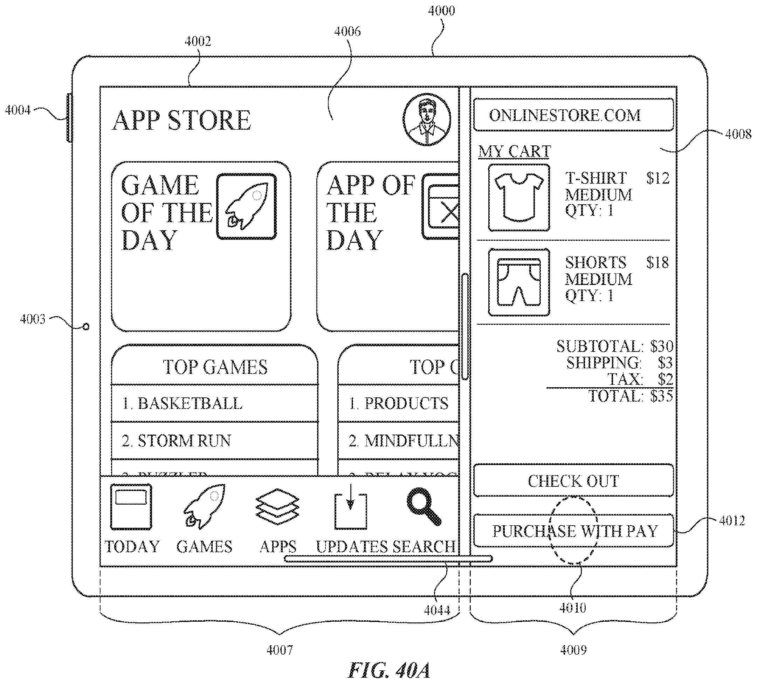

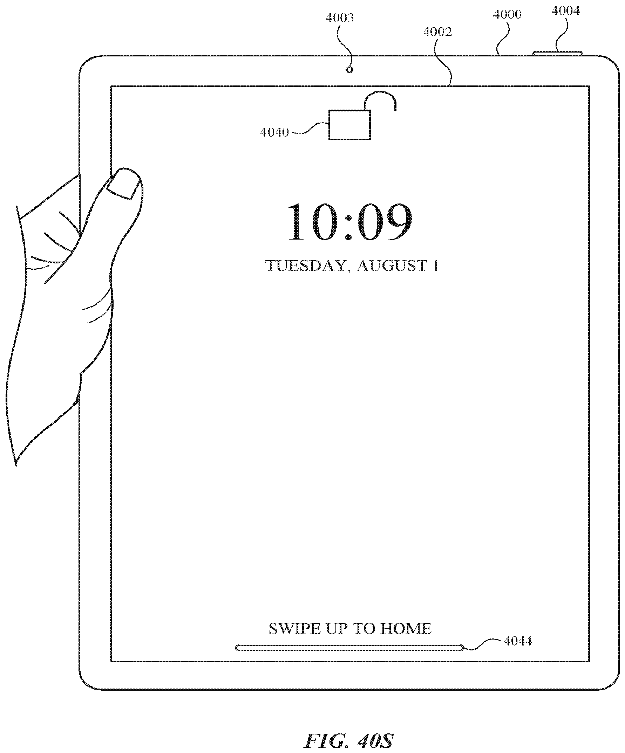

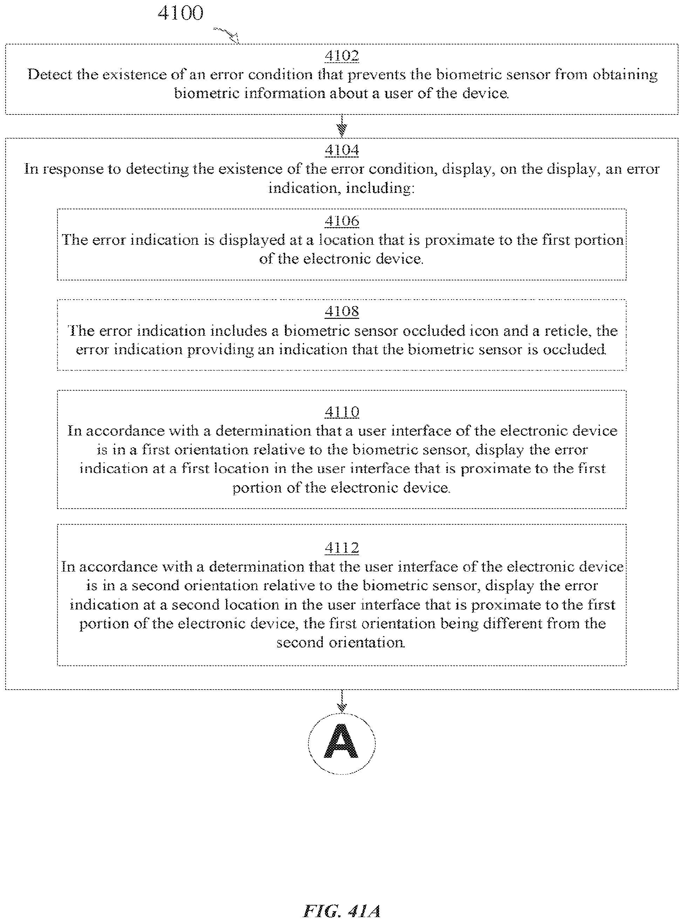

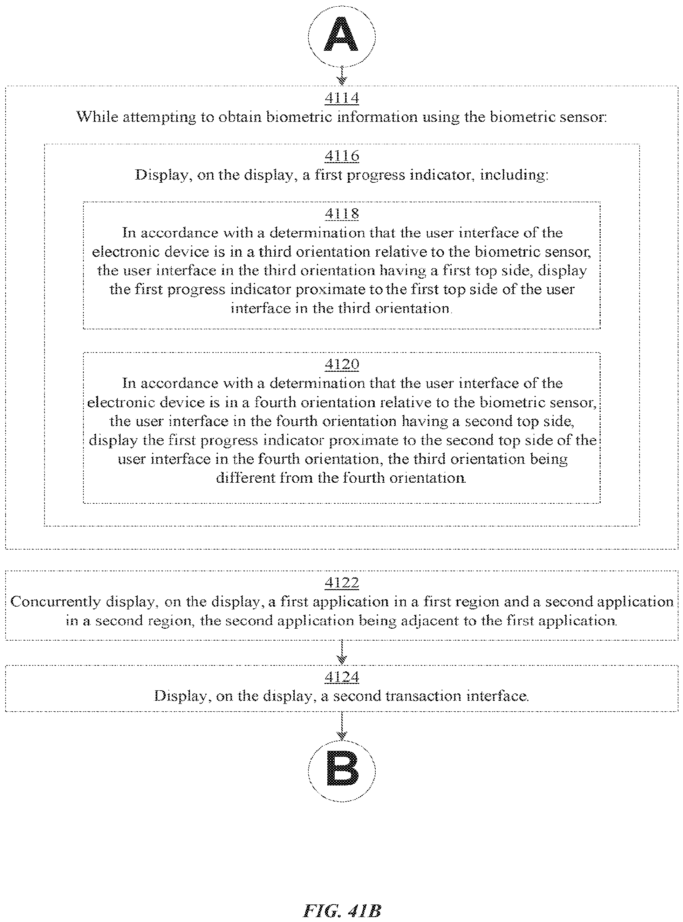

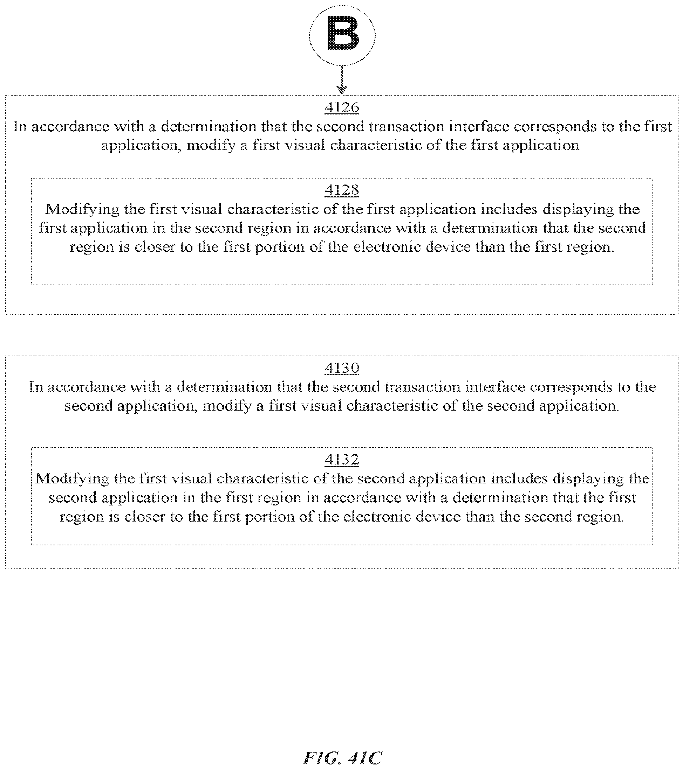

Accordingly, the present technique provides electronic devices with faster, more efficient methods and interfaces for implementing biometric authentication. Such methods and interfaces optionally complement or replace other methods for implementing biometric authentication. Such methods and interfaces reduce the cognitive burden on a user and produce a more efficient human-machine interface. For battery-operated computing devices, such methods and interfaces conserve power and increase the time between battery charges. Such methods and interfaces also reduce the number of unnecessary, extraneous, or repetitive input required at computing devices, such as smartphones and smartwatches. The invention is defined by the independent claims. The dependent claims define advantageous embodiments. Examples of particular relevance to the claimed invention are examples of Figures 40A-40U and 41A-41C, and the parts of the description related thereto.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for implementing biometric authentication, thereby increasing the effectiveness, efficiency, and user satisfaction with such devices. Such methods and interfaces optionally complement or replace other methods for implementing biometric authentication.

### DESCRIPTION OF THE FIGURES

For a better understanding of the various described examples, reference should be made to the Description of Embodiments below, in conjunction with the following drawings in which like reference numerals refer to corresponding parts throughout the figures.
FIGS. 40A-40U illustrate exemplary user interfaces for providing indications about the biometric sensor during biometric authentication, in accordance with some examples.
FIGS. 41A-41C are flow diagrams illustrating a method for providing indications about the biometric sensor during biometric authentication, in accordance with some examples.

### DESCRIPTION OF EMBODIMENTS

The following description sets forth exemplary methods, parameters, and the like. It should be recognized, however, that such description is not intended as a limitation on the scope of the present invention but is instead provided as a description of exemplary embodiments.

There is a need for electronic devices that provide efficient methods and interfaces for implementing biometric authentication of biometric features. For example, there is a need for electronic devices that provide a convenient and efficient method for enrolling one or more portions of a biometric feature. For another example, there is a need for electronic devices that provide a quick and intuitive technique for selectively accessing secure data in accordance with biometric authentication. For another example, there is a need for electronic devices that provide a quick and intuitive technique for enabling a function of a device in accordance with biometric authentication. Such techniques can reduce the cognitive burden on a user who enrolls a biometric feature and/or biometrically authenticates with a device, thereby enhancing overall productivity. Further, such techniques can reduce processor and battery power otherwise wasted on redundant user inputs.

Below, FIGS. 40A-40U illustrate exemplary user interfaces for providing indications about the biometric sensor during biometric authentication. FIGS. 41A-41C are flow diagrams illustrating a method for providing indications about the biometric sensor during biometric authentication. The user interfaces in FIGS. 40A-40U are used to illustrate the processes described below, including the processes in FIGS. 41A-41C.

Although the following description uses terms "first," "second," etc. to describe various elements, these elements should not be limited by the terms. These terms are only used to distinguish one element from another. For example, a first touch could be termed a second touch, and, similarly, a second touch could be termed a first touch, without departing from the scope of the various described embodiments. The first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad).

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that is, in some circumstances, otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user. Using tactile outputs to provide haptic feedback to a user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some embodiments, a tactile output pattern specifies characteristics of a tactile output, such as the amplitude of the tactile output, the shape of a movement waveform of the tactile output, the frequency of the tactile output, and/or the duration of the tactile output.

When tactile outputs with different tactile output patterns are generated by a device (e.g., via one or more tactile output generators that move a moveable mass to generate tactile outputs), the tactile outputs can invoke different haptic sensations in a user holding or touching the device. While the sensation of the user is based on the user's perception of the tactile output, most users will be able to identify changes in waveform, frequency, and amplitude of tactile outputs generated by the device. Thus, the waveform, frequency and amplitude can be adjusted to indicate to the user that different operations have been performed. As such, tactile outputs with tactile output patterns that are designed, selected, and/or engineered to simulate characteristics (e.g., size, material, weight, stiffness, smoothness, etc.); behaviors (e.g., oscillation, displacement, acceleration, rotation, expansion, etc.); and/or interactions (e.g., collision, adhesion, repulsion, attraction, friction, etc.) of objects in a given environment (e.g., a user interface that includes graphical features and objects, a simulated physical environment with virtual boundaries and virtual objects, a real physical environment with physical boundaries and physical objects, and/or a combination of any of the above) will, in some circumstances, provide helpful feedback to users that reduces input errors and increases the efficiency of the user's operation of the device. Additionally, tactile outputs are, optionally, generated to correspond to feedback that is unrelated to a simulated physical characteristic, such as an input threshold or a selection of an object. Such tactile outputs will, in some circumstances, provide helpful feedback to users that reduces input errors and increases the efficiency of the user's operation of the device.

In some embodiments, a tactile output with a suitable tactile output pattern serves as a cue for the occurrence of an event of interest in a user interface or behind the scenes in a device. Examples of the events of interest include activation of an affordance (e.g., a real or virtual button, or toggle switch) provided on the device or in a user interface, success or failure of a requested operation, reaching or crossing a boundary in a user interface, entry into a new state, switching of input focus between objects, activation of a new mode, reaching or crossing an input threshold, detection or recognition of a type of input or gesture, etc. In some embodiments, tactile outputs are provided to serve as a warning or an alert for an impending event or outcome that would occur unless a redirection or interruption input is timely detected. Tactile outputs are also used in other contexts to enrich the user experience, improve the accessibility of the device to users with visual or motor difficulties or other accessibility needs, and/or improve efficiency and functionality of the user interface and/or the device. Tactile outputs are optionally accompanied with audio outputs and/or visible user interface changes, which further enhance a user's experience when the user interacts with a user interface and/or the device, and facilitate better conveyance of information regarding the state of the user interface and/or the device, and which reduce input errors and increase the efficiency of the user's operation of the device.

FIGS. 40A-40U illustrate exemplary user interfaces for providing indications about the biometric sensor during biometric authentication, in accordance with some examples. The user interfaces in these figures are used to illustrate the processes described below, including the processes in FIGS. 41A-41C.

FIG. 40A illustrates electronic device 4000. In the exemplary examples illustrated in FIGS. 40A-40U, electronic device 4000 is a tablet computer. In other examples, electronic device 4000 can be a different type of electronic device, such as a wearable device (e.g., a smartwatch). Electronic device 4000 includes display 4002, one or more input devices (e.g., touchscreen of display 4002, button 4004, and a microphone), and a wireless communication radio. In some examples, the electronic device includes a plurality of cameras. In some examples, the electronic device includes only one camera. In FIG. 40A, the electronic device includes biometric sensor 4003. In some examples, the biometric sensor is one or more biometric sensors that can include a camera, such as an infrared camera, a thermographic camera, or a combination thereof. In some examples, biometric sensor 4003 is biometric sensor 703. In some examples, the one or more biometric sensors include one or more fingerprint sensors (e.g., a fingerprint sensor integrated into a button). In some examples, the device further includes a light-emitting device (e.g., light projector), such as an IR flood light, a structured light projector, or a combination thereof. The light-emitting device is, optionally, used to illuminate the biometric feature (e.g., the face) during capture of biometric data of biometric features by the one or more biometric sensors.

At FIG. 40A, a user wishes to purchase goods using payment information stored on electronic device 4000. As depicted in FIG. 40A, electronic device 4000 is in a split screen (e.g., multitasking) mode. While in the split screen mode, electronic device 4000 concurrently displays app store user interface (UI) 4006 in left region 4007 of display 4002 and browser UI 4008 in right region 4009 of display 4002. While concurrently displaying app store UI 4006 and browser UI 4008, electronic device 4000 receives input 4010 at purchase affordance 4012.

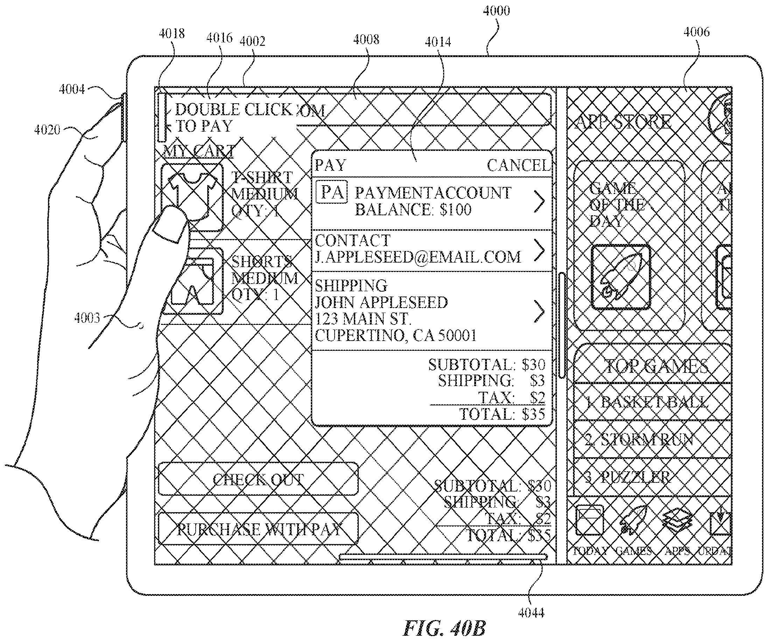

At FIG. 40B, in response to receiving input 4010 at purchase affordance 4012, electronic device 4000 swaps the applications being displayed in left region 4007 and right region 4009 of display 4002. Specifically, electronic device 4000 displays browser UI 4008 in left region 4007, and displays app store UI 4006 in right region 4009. Electronic device 4000 swaps the applications in order to place the application associated with the goods being purchased in the region that is closer to biometric sensor 4003. By placing browser UI 4008 in left region 4007, electronic device 4000 provides an indication to the user of the location of biometric sensor 4003, which is used to authenticate the user prior to authorizing payment for purchasing the goods. As shown in FIG. 40B, swapping the applications also places the application associated with the goods being purchased in the region that is closer to button 4004. In some examples, when the button 4004 and the biometric sensor 4003 are not in close proximity (e.g., on the same side), electronic device 4000 swaps applications, when necessary, to place the application associated with the goods being purchased in the region that is closer to the biometric sensor 4003. In some examples, when button 4004 and biometric sensor 4003 are not in close proximity (e.g., on the same side), electronic device 4000 swaps applications, when necessary, to place the application associated with the goods being purchased in the region that is closer to the button 4004.

Additionally, as depicted in FIG. 40B, in response to receiving input 4010 at purchase affordance 4012, electronic device 4000 darkens browser UI 4008 while darkening app store UI 4006 to a greater degree than that of browser UI 4008. By darkening browser UI 4008 less than app store UI 4006, electronic device 4000 indicates to the user which application is associated with pay sheet interface 4014 and the goods the user wishes to purchase.

Moreover, in response to receiving input 4010 at purchase affordance 4012, electronic device 4000 concurrently displays pay sheet interface 4014 with information about the goods being purchased and prompt 4016 to prompt the user to double-click button 4004 to initiate a process for authorizing payment for the goods. Further in response to receiving input 4010 at purchase affordance 4012, electronic device 4000 displays dynamic indication 4018 to emphasize the location of button 4004. While displaying pay sheet interface 4014, electronic device receives input 4020 at button 4004 (e.g., double-press of button 4004). In some examples, prompt 4016 includes some or all of the features of prompt 2416. In some examples, dynamic indication 4018 includes some or all of the features of dynamic indication 2418. In some examples, pay sheet interface 1014 includes the name of the application to which it corresponds (e.g., the name of the application from which the user initiated the process for authorizing payment).

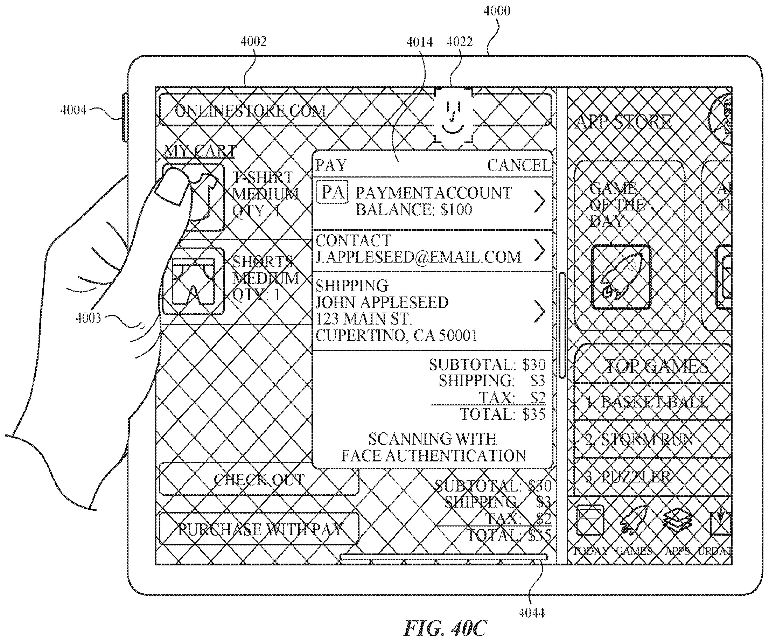

At FIG. 40C, in response to receiving input 4020 at button 4004, electronic device 4000 initiates a process for authorizing payment for the goods. Authorizing payment for the goods requires successfully authenticating the user. As a result, in response to receiving input 4020, electronic device 4000 initiates biometric authentication using biometric sensor 4003. After initiating biometric authentication, electronic device 4000 displays face glyph 4022, which provides an indication that electronic device 4000 is attempting to biometrically authenticate the user (e.g., attempting to obtain biometric information about the user using biometric sensor 4003). In some examples, in response to receiving input 4020 at button 4004, electronic device displays an animation of face glyph 4022 moving from the location of prompt 4016 to the location of face glyph 4022, as depicted in FIG. 40C. In some examples, the animation is such that face glyph 4022 appears to slide out of prompt 4016.

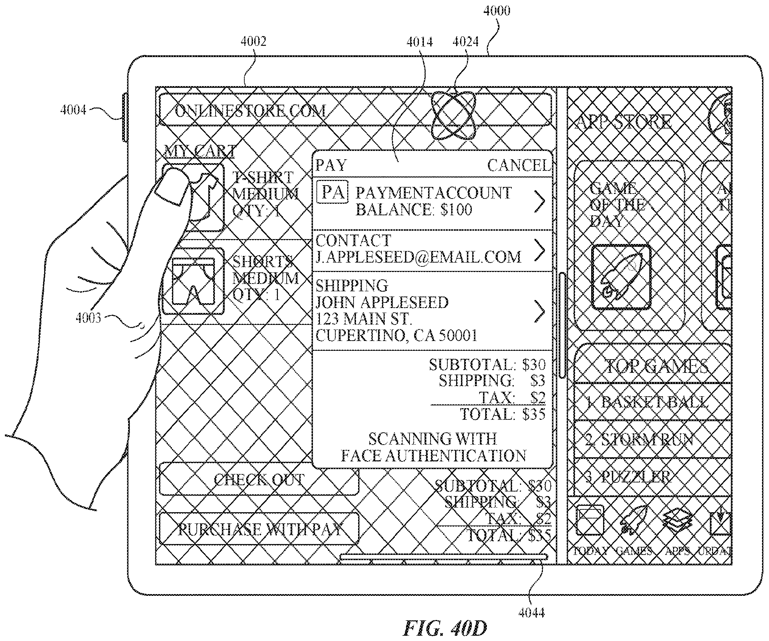

At FIG. 40D, after displaying face glyph 4022, electronic device transitions to displaying authentication glyph 4024, which provides an indication that electronic device 4000 is attempting to biometrically authenticate the user (e.g., continuing to try to obtain biometric information, attempting to match obtained information with stored authorized credentials). Authentication glyph 4024 includes a plurality of rings that rotate spherically.

While displaying authentication glyph 4024, electronic device 4000 detects that an error condition exists (e.g., a condition that prevents biometric sensor 4003 from obtaining sufficient information about the user's face). Specifically, electronic device 4000 detects that biometric sensor 4003 is covered by a physical object (e.g., the user's hand)). In some examples, electronic device 4000 does not detect an error condition, and is able to obtain sufficient information about the user's face. In some examples, after obtaining sufficient information about the user's face and while displaying authentication glyph 4024, electronic device 4000 determines whether the obtained information satisfies biometric authentication criteria (e.g., determines whether the obtained biometric information matches, within a threshold, a biometric template associated with the user (e.g., stored authorized credentials)). In some examples, upon determining that biometric authentication is successful (e.g., biometric authentication criteria is satisfied), electronic device 4000 transitions to an unlocked state.

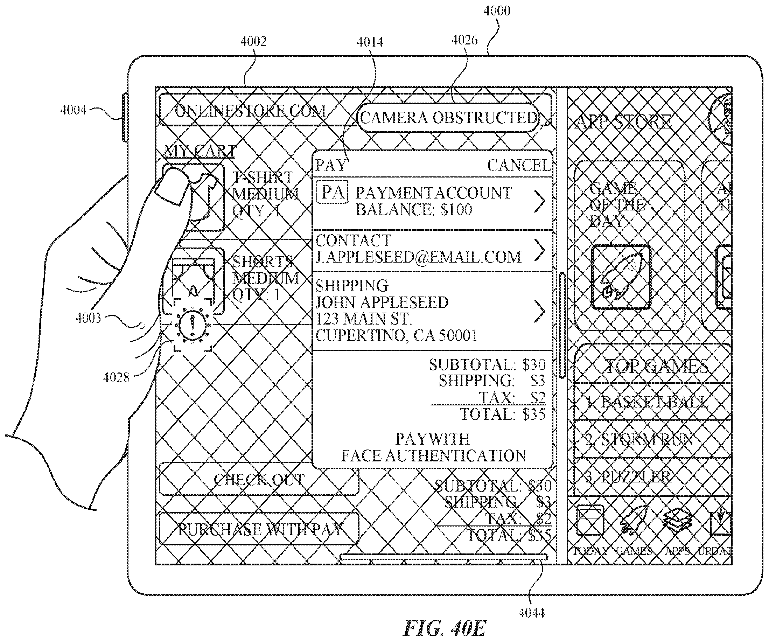

At FIG. 40E, in response to detecting that an error condition exists, electronic device 4000 displays error indication 4026 at a location at the top of display 4002 (e.g., with respect to the ground, with respect to the user). Error indication 4026 provides an indication of the error condition that currently exists. Further in response to detecting that an error conditions exists, electronic device 4000 displays error icon 4028 at a location of display 4002 that is adjacent to biometric sensor 4003, thereby providing an indication of the location of biometric sensor 4003. By providing an indication of the location of biometric sensor 4003, error icon 4028 suggests to the user the cause of the error condition. In some examples, in response to detecting that an error condition exists, electronic device 4000 displays error indication 4026 at a location adjacent to biometric sensor 4003. In some examples, error indication 4026 includes some or all of the features of error indication 3814A, including a shimmer effect.

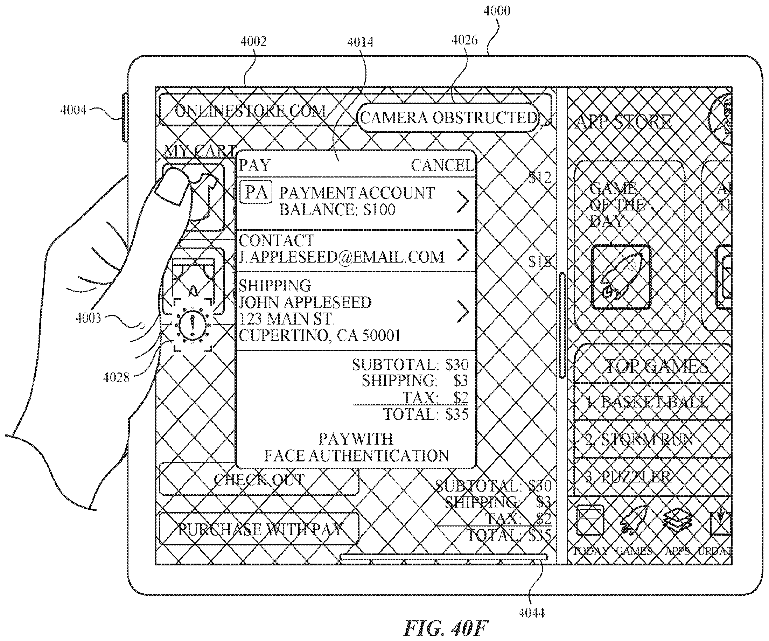

At FIG. 40F, further in response to detecting that an error condition exists, electronic 4000 displays an animation of pay sheet interface 4014 moving from its initial location in FIG. 40E to the location in FIG. 40F, which is closer to biometric sensor 4003. By moving pay sheet interface towards biometric sensor 4003, electronic device 4000 indicates to the user the existence of error icon 4028 in addition to indicating the location of biometric sensor 4003 (and thus suggesting to the user the cause of the error condition).

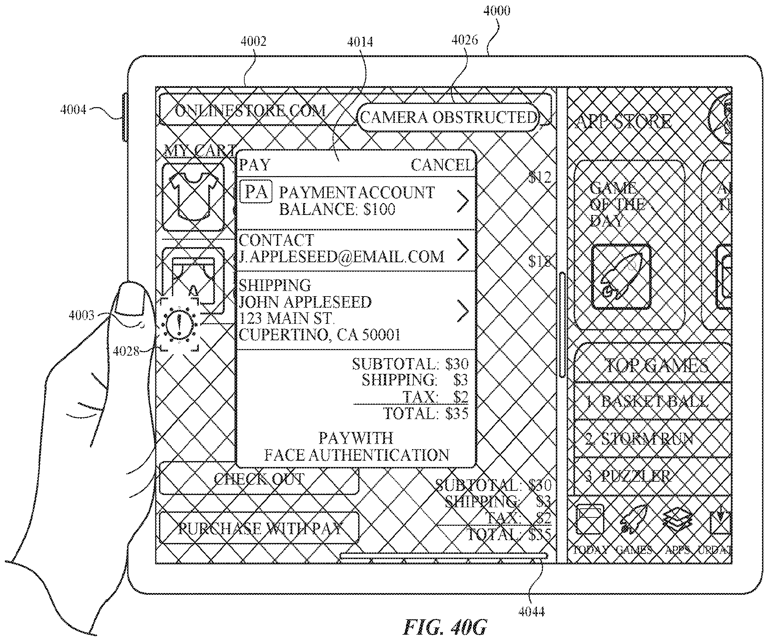

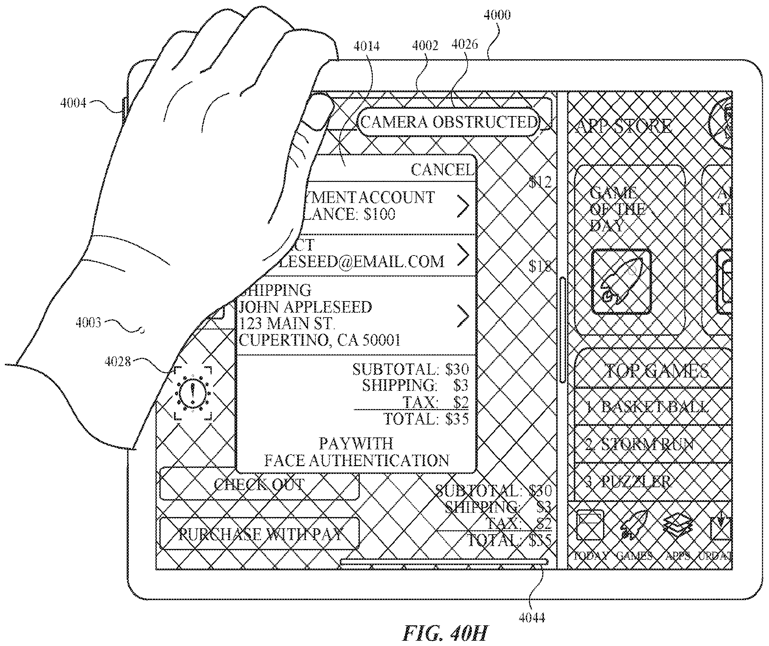

In some examples, error icon 4028 is displayed at different location of display 4002 depending on the positioning of the user's hand on display 4002. As illustrated in FIG. 40F, the user's hand is covering a portion of display 4002 that is adjacent to biometric sensor 4003. While the user's hand is in contact with display 4002, electronic device 4000 detects an input as a result of the contact from the user's hand. In response to detecting this input, electronic device 4000 displays error icon 4028 at a location at which the input is not detected. As another example, in FIG. 40G, the user's hand is covering less of display 4002 than the user's hand in FIG. 40F. In some examples, in response to detecting the input of the user's hand in FIG. 40G, electronic device 4000 displays error icon 4028 at a location that is different from the location in FIG. 40F, where the location in FIG. 40G is closer to biometric sensor 4003 than that of FIG. 40F. As yet another example, in FIG. 40H, the user's hand is covering a large portion of the upper-left side of display 4002. In some examples, in response to detecting the input of the user's hand in FIG. 40H, electronic device 4000 displays error icon 4028 at a location that is different from the locations in FIGS. 40F-40G. Specifically, in some examples, electronic device 4000 displays error icon 4028 at a location that is close to (or substantially near) biometric sensor 4003 without being at a location where the input of the user's hand is detected.

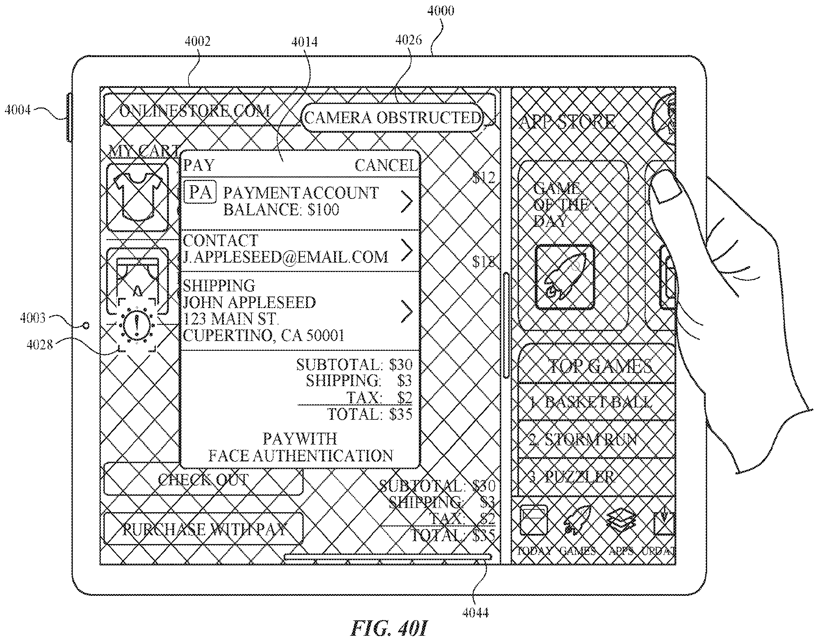

At FIG. 40I, the user removes her hand such that it no longer covers biometric sensor 4003. While displaying error icon 4028 and error icon 4028, electronic device 4000 detects that the error condition no longer exists.

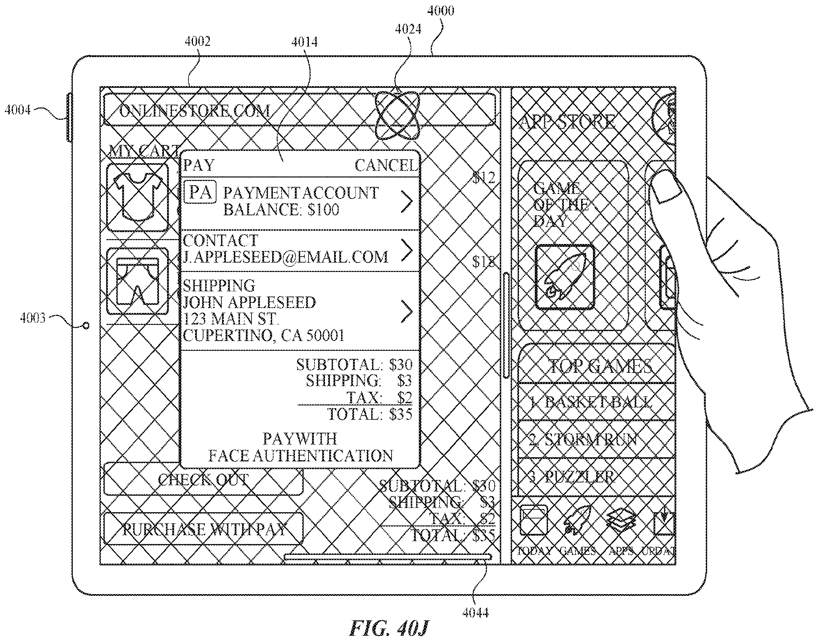

At FIG. 40J, in response to detecting that the error condition no longer exists, electronic device 4000 automatically retries biometric authentication. While retrying biometric authentication, electronic device 4000 displays authentication glyph 4024. While displaying authentication glyph 4024, electronic device 4000 attempts to biometrically authenticate the user. Specifically, electronic device 4000 obtains information about the user's face using biometric sensor 4003, and determines whether biometric authentication is successful (e.g., the obtained information matches stored authorized credentials).

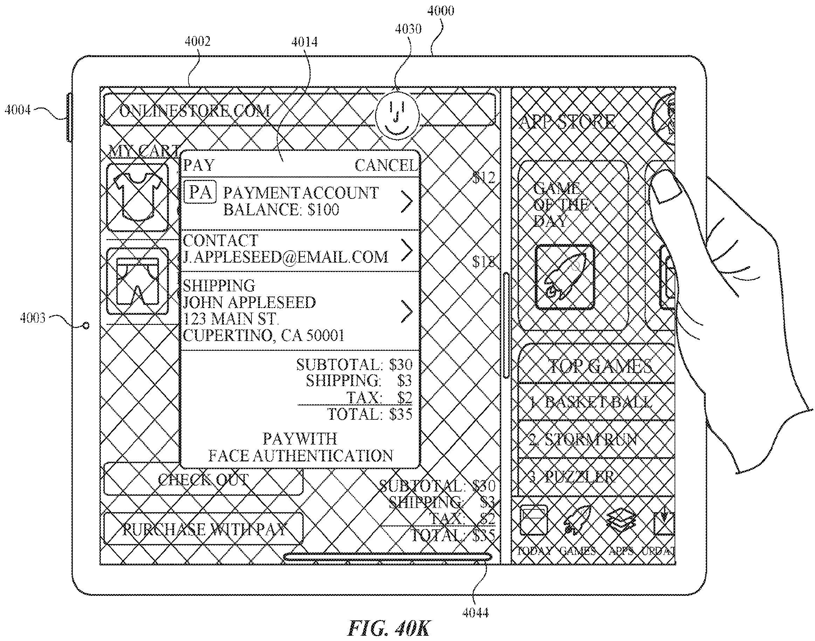

While retrying biometric authentication, electronic device 4000 determines that biometric authentication is successful. At FIG. 40K, upon determining biometric authentication is successful, electronic device 4000 displays success glyph 4030, which provides an indication that biometric authentication was successful.

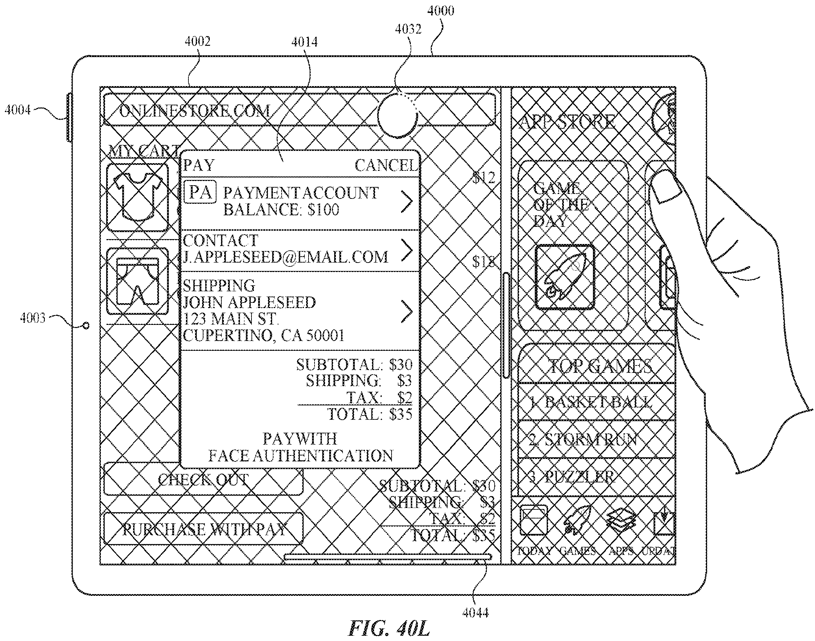

At FIG. 40L, further in response to determining that biometric authentication is successful, electronic device 4000 displays processing indicator 4032, which provides an indication that the payment transaction is being processed (e.g., electronic device 4000 is transmitting payment information (e.g., credentials) to an external device (e.g., server) to authorize payment).

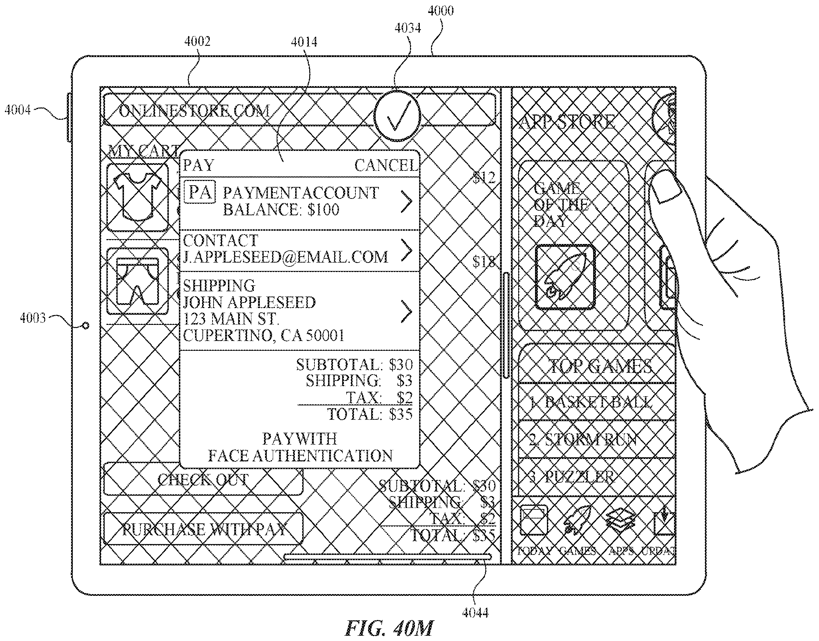

At FIG. 40M, upon receiving an indication that payment has been completed (e.g., authorized), electronic device 4000 displays completed indication 4034, which provides an indication that payment has been completed..

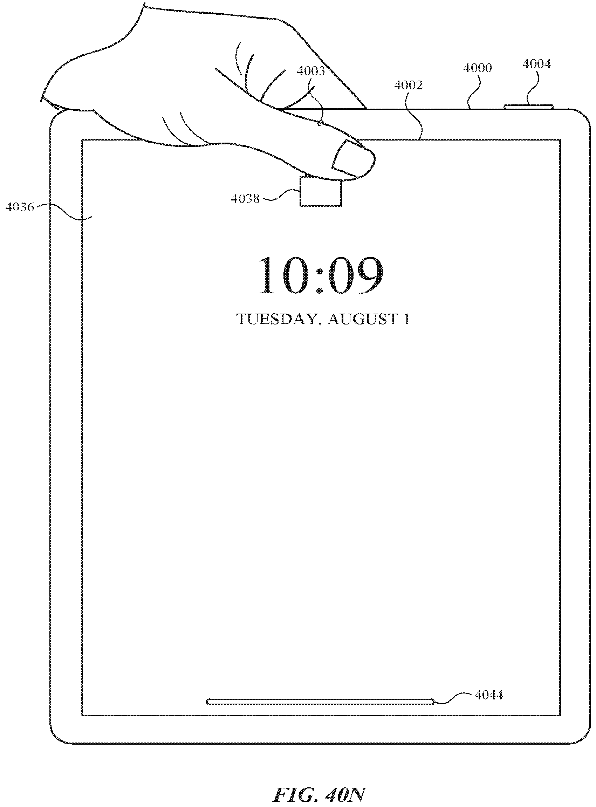

FIGS. 40N-40S illustrate a technique for displaying error indication 4026 and error icon 4028 when error indication 4026 and error icon 4028 are to be displayed in approximately the same location. At FIG. 40N, a user wishes to unlock the device to access restricted content (e.g., a home screen, a most recently used application). FIG. 40N depicts electronic device 4000 in a portrait orientation with respect to the ground, where a user is covering biometric sensor 4003 with her hand. Additionally, electronic device 4000 displays locked state UI 4036 with lock icon 4038. Lock icon 4038 provides an indication that electronic device 4000 is in a locked state.

While displaying locked state UI 4036, electronic device 4000 receives a request to unlock the device. For example, electronic device 4000 detects the user lifting the device from a substantially horizontal position.

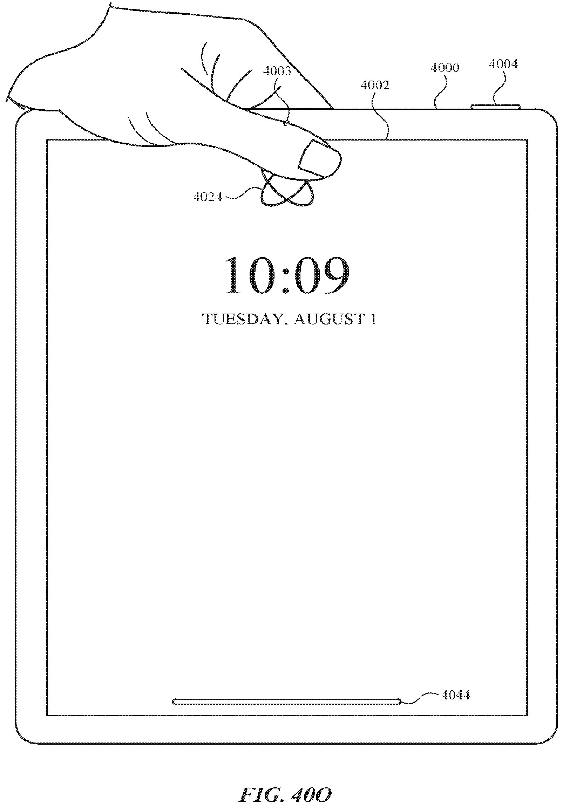

At FIG. 40O, in response to receiving the request to unlock the device, electronic device 4000 attempts to biometrically authenticate the user. While attempting to biometrically authenticate the user, electronic device 4000 displays authentication glyph 4024. Additionally, while attempting to biometrically authenticate the user, electronic device 4000 detects that an error condition exists (e.g., a condition that prevents biometric sensor 4003 from obtaining sufficient information about the user's face). Specifically, electronic device 4000 detects that biometric sensor 4003 is covered by a physical object (e.g., the user's hand)).

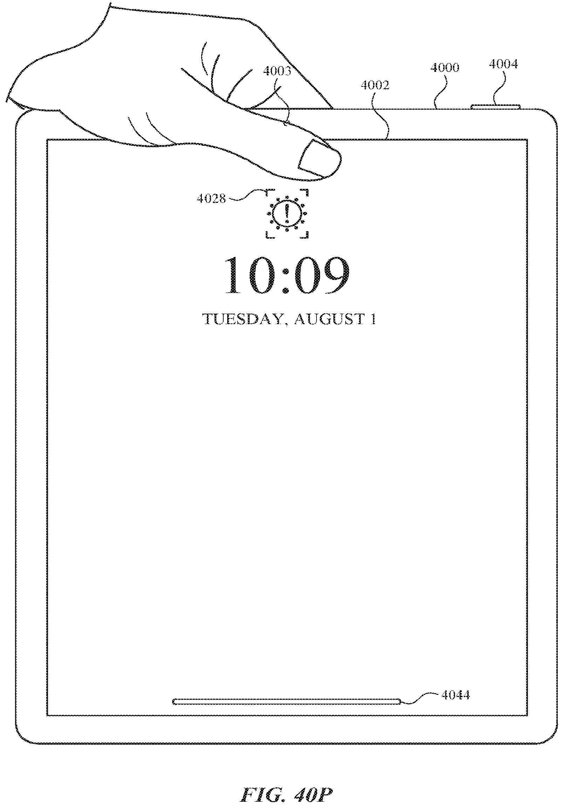

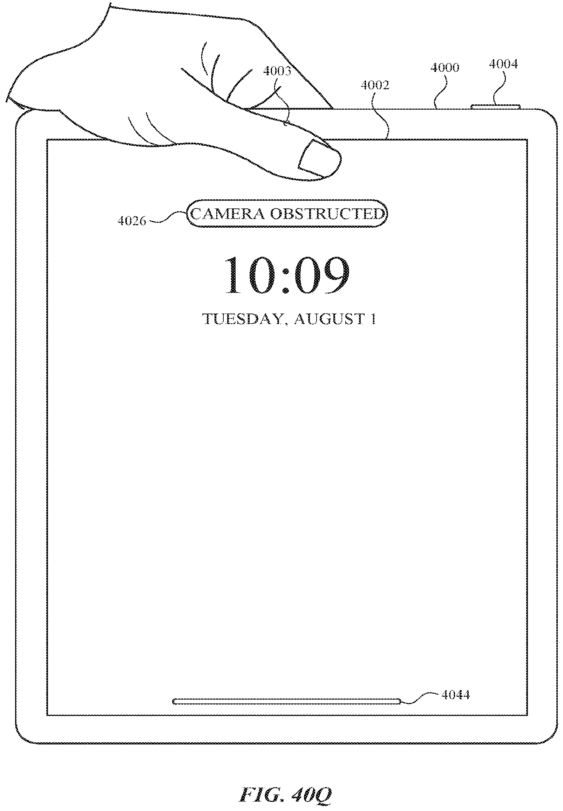

At FIG. 40P, in response to detecting that an error condition exists, electronic device 4000 displays error icon 4028 at a location of display 4002 that is near biometric sensor 4003 (e.g., at the top of display 4002). Further in response to detecting that an error condition exists, electronic device 4000 determines that error indication 4026 is to be displayed at approximately the same location as error icon 4028. Upon determining that error indication 4026 is to be displayed at approximately the same location, electronic device 4000 does not immediately display error indication 4028, and instead displays error indication 4026 as part of an animation that transitions from error icon 4028 to error indication 4026 to lock icon 4038, as described below with respect to FIGS. 40Q-40R.

At FIG. 40Q, after displaying error icon 4028, electronic device 4000 displays (e.g., replaces display of error icon 4028 with) error indication 4026, which as discussed above, provides an indication of the cause of the error condition.

While displaying error indication 4026, the user removes her hand from biometric sensor 4003 such that it no longer covers biometric sensor 4003. In response to detecting that the error condition no longer exists, electronic device 4000 automatically retries biometric authentication.

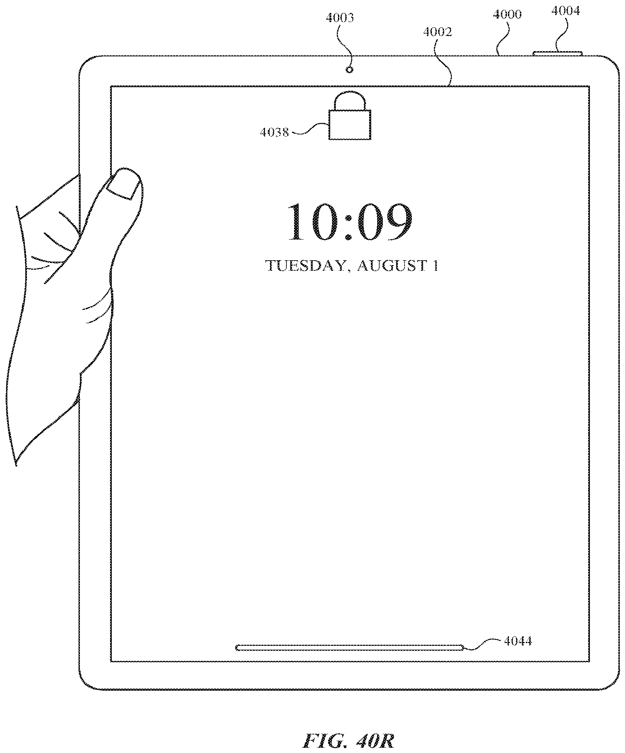

At FIGS. 40R-40S, upon determining that authentication is successful as a result of retrying biometric authentication, electronic device 4000 transitions from a locked state to an unlocked state. Specifically, electronic device 4000 displays (e.g., replaces display of error indication 4026 with) an animation of lock icon 4038 transitioning to unlock icon 4040, which provides an indication to the user that electronic device 4000 has transitioned to an unlocked state. In some examples, instead of successful biometric authentication, electronic device 4000 determines that authentication is unsuccessful as a result of retrying biometric authentication. In some examples, upon determining that authentication is unsuccessful, electronic device 4000 displays a passcode entry UI with an affordance which, when activated, triggers retrying biometric authentication. In some examples, while retrying biometric authentication, electronic device 4000 darkens all portions of display 4002 except for the user interface associated with retrying biometric authentication.

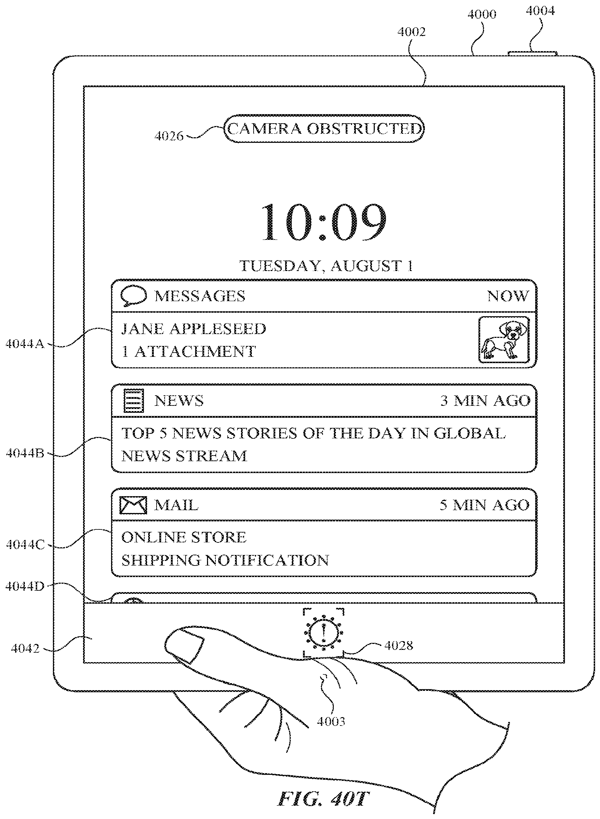

FIG. 40T illustrates a technique for displaying error icon 4028 when error icon 4028 is to be displayed at approximately the same location as one of the notifications being displayed (e.g., 4044A-D). In some examples, a user wishes to view the restricted content of one or more of the notifications (e.g., 4044A-D) that are displayed while electronic device 4000 is in a locked state. As depicted in FIG. 40T, a user is covering biometric sensor 4003 with her hand when the electronic device is a portrait orientation, where biometric sensor 4003 is located near the bottom of the device. In some examples, while attempting to biometrically authenticate a user to access the restricted content of the notifications, electronic device 4000 detects that an error condition exists as a result of the user covering biometric sensor 4003 with her hand. In response to detecting that an error condition exists, electronic device 4000 determines that error icon 4028 is to be displayed at approximately the same location as one of the notifications (e.g., 4044A-D). Upon making this determination and in response to detecting that the error condition exists, electronic device 4000 displays UI element 4042 (e.g., a background) concurrently with error icon 4028 to provide a background on which to overlay the display of error icon 4028. As depicted in FIG. 40T, UI element 4042 is opaque such that the notification on which error icon 4028 is overlaid (e.g., 4042D) is not visible to the user. In some examples, UI element 4042 is transparent such that the notification on which error icon 4028 is overlaid is visible to the user.

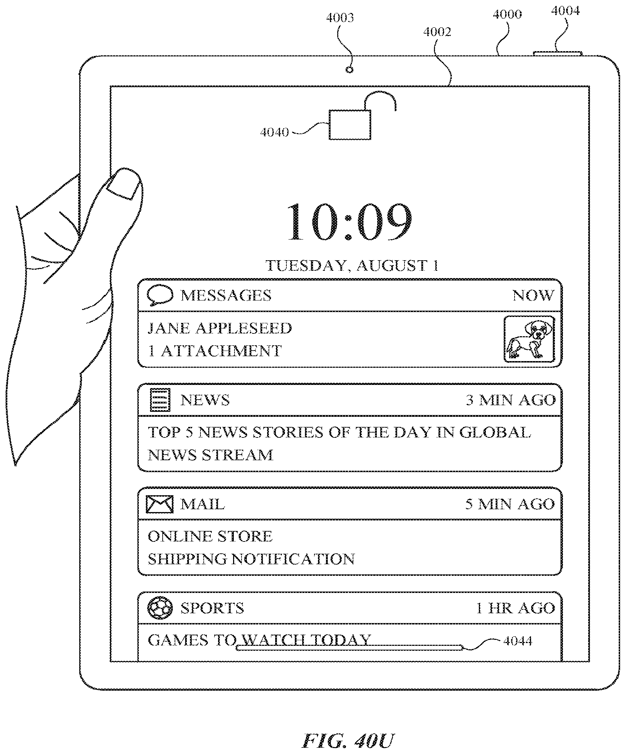

FIG. 40T also illustrates a technique for hiding unlock indication 4044 of FIG. 40U when error icon 4028 is to be displayed at approximately the same location as unlock indication 4044. In some examples, electronic device 4000 displays unlock indication 4044, which provides an indication of an approximate location on display 4002 from which a user can start an upward swipe to initiate biometric authentication. In some examples, while displaying unlock indication 4044, electronic device 4000 detects that an error condition exists as a result of the user covering biometric sensor 4003 with her hand. In some examples, in response to detecting that an error condition exists, electronic device 4000 determines that error icon 4028 is to be displayed at approximately the same location as unlock indication 4044. In some examples, upon making this determination and in response to detecting that the error condition exists, electronic device 4000 ceases to display unlock indication 4044, and displays error icon 4028 at approximately the same location at which unlock indication 4044 was displayed.

While displaying error icon 4028, electronic device 4000 detects that the error condition no longer exists (e.g., due to the user removing her hand from biometric sensor 4003). As depicted in FIG. 40U, the user has removed her hand from biometric sensor 4003. At FIG. 40U, upon detecting that the error condition no longer exists, electronic device 4000 ceases to display error icon 4028, and re-displays unlock indication 4044 at the location at which it was previously displayed.

FIGS. 41A-41C are flow diagrams illustrating a method for providing indications about the biometric sensor during biometric authentication, in accordance with some examples. Method 4100 is performed at an electronic device (e.g., 4000) with a display (e.g., 4002) and a biometric sensor (e.g., 4003) (e.g., a first biometric sensor of a device with a plurality of biometric sensors) (e.g., a fingerprint sensor, a contactless biometric sensor (e.g., a biometric sensor that does not require physical contact, such as a thermal or optical facial recognition sensor), an iris scanner) at a first portion of the electronic device (e.g., a portion that is not a part of the display). In some examples, the biometric sensor includes one or more cameras. Some operations in method 4100 are, optionally, combined, the orders of some operations are, optionally, changed, and some operations are, optionally, omitted.

As described below, method 4100 provides an intuitive way for providing indications about the biometric sensor during biometric authentication. The method reduces the cognitive burden on a user for performing biometric authentication, thereby creating a more efficient human-machine interface. For battery-operated computing devices, enabling a user to perform biometric authentication faster and more efficiently conserves power and increases the time between battery charges.

The electronic device (e.g., 4000) detects (4102) (e.g., detects in response to a request to perform an operation that requires authentication) the existence of an error condition that prevents the biometric sensor from obtaining biometric information about a user of the device (e.g., a contactless biometric sensor such as a thermal or optical facial recognition sensor) is occluded (e.g., partially occluded, fully occluded, occluded to a degree sufficient to inhibit operation of the sensor) (e.g., occluded by a portion of the user (e.g., a hand), while interacting with the electronic device).

In response (4104) to detecting the existence of the error condition, the electronic device (e.g., 4000) displays, on the display (e.g., 4002), an error indication (e.g., 4028) (e.g., a graphical icon). In some examples, the error indication includes text (e.g., indicating that the sensor is occluded. In some examples, the error indication does not include text. The error indication is displayed (4106) at a location that is proximate to the first portion of the electronic device. In some examples, the location is at or near the portion of the display that is closest to the location of the biometric sensor (e.g., 4003). Displaying the error indication provides the user with feedback about the current state of the device (e.g., that an error condition is preventing successful biometric authentication) and prompts the user to take further action to correct the error condition. Providing improved feedback to the user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently. Displaying the error indication near the biometric sensor provides the user with feedback as to the association of the biometric sensor with the processes occurring at the device (e.g., attempted authentication). Specifically, the user becomes aware of the biometric sensor during biometric authentication such that the user is less likely to perform an action that interferes with the biometric sensor or alternatively, the user is prompted to take corrective action. Providing improved feedback to the user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, the error indication (e.g., 4028) includes (4108) a biometric sensor occluded icon and a reticle, the error indication providing an indication that the biometric sensor is occluded. (ISE, the error indication is associated with the electronic device performing biometric authentication (e.g., using the biometric sensor to obtain biometric information about a biometric feature (e.g., face, fingerprint).) Providing an indication that the biometric sensor is occluded provides the user with feedback about the current state of the device (e.g., that the biometric sensor is occluded) and prompts the user to take further action to correct the error condition. Providing improved feedback with instructions on proper movements of the biometric feature therefore enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

In accordance (4110) with a determination that a user interface of the electronic device is in a first orientation relative to the biometric sensor, the electronic device (e.g., 4000) displays the error indication at a first location in the user interface that is proximate to (e.g., adjacent to, near to, within a predetermined distance of) the first portion of the electronic device.

In accordance (4112) with a determination that the user interface of the electronic device is in a second orientation relative to the biometric sensor, the electronic device (e.g., 4000) displays the error indication (e.g., 4028) at a second location in the user interface that is proximate to (e.g., adjacent to, near to, within a predetermined distance of) the first portion of the electronic device, the first orientation being different from the second orientation.

In some examples, while attempting (4114) to obtain biometric information using the biometric sensor (e.g., 4003), the electronic device (e.g., 4000) displays (4116), on the display (e.g., 4002), a first progress indicator (e.g., 4024, 4026, 4038, 4040). In some examples, the first progress indicator provides an indication of the current state of the electronic device (e.g., locked state, unlocked state, performing biometric authentication, error state, error condition). In some examples, in accordance (4118) with a determination that the user interface (e.g., 4006, 4008) of the electronic device is in a third orientation relative to the biometric sensor, the user interface in the third orientation having a first top side, the electronic device displays the first progress indicator proximate to (e.g., adjacent to, near to, within a predetermined distance of) the first top side of the user interface in the third orientation. In some examples, in accordance (4120) with a determination that the user interface of the electronic device is in a fourth orientation relative to the biometric sensor, the user interface in the fourth orientation having a second top side, the electronic device displays the first progress indicator proximate to (e.g., adjacent to, near to, within a predetermined distance of) the second top side of the user interface in the fourth orientation, the third orientation being different from the fourth orientation. In some examples, the first progress indicator is displayed on the display at a location that is closest to or proximate to (e.g., adjacent to, near to, within a predetermined distance of) the biometric sensor. Displaying the first progress indicator near the top of the display regardless of orientation ensures that the user is more likely to be aware of the provided feedback to the user (e.g., the progress indicator). Providing improved visual feedback to the user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently. In some examples, no indicator is displayed during biometric authentication.

In some examples, the electronic device (e.g., 4000) displays, on the display (e.g., 4002), a second progress indicator (e.g., 4024, 4026, 4038, 4040) of the electronic device. In some examples, the second progress indicator provides an indication of the current state of the electronic device (e.g., locked state, unlocked state, performing biometric authentication, error state). In some examples, the first progress indicator is the second progress indicator. In some examples, the second progress indicator is an animation with a first portion (e.g., an indication that the electronic device is performing biometric authenticating using the biometric sensor (e.g., 4024) (e.g., rotating rings)) and a second portion (e.g., an indication of an error condition or error state (e.gg., 4026), an indication of the current lock or unlock state of the electronic device (e.g., lock icon (e.g., 4038), unlock icon (e.g., 4040))) that is different from the first portion. In some examples, in accordance with a determination that the second progress indicator is displayed at the location that is proximate to the first portion of the electronic device, the electronic device displays the error indication (e.g., 4028) as part of the animation subsequent to the first portion and prior to the second portion.

In some examples, the electronic device (e.g., 4000) displays, on the display (e.g., 4002), a home affordance (e.g., 4044) (e.g., an indication of a location of a gesture that when performed, results in displaying a home screen such as a swipe up gesture from an edge of the display or a tap gesture on the affordance) at a third location (e.g., a location proximate to a side (e.g., bottom side) of the user interface) in the user interface. In some examples, in accordance with a determination that the error indication (e.g., 4028) is displayed at the third location, the electronic device ceases to display the home affordance (e.g., 4044) while displaying the error indication at the third location. Ceasing display of the home affordance while displaying an error indication allows the user to quickly realize the home affordance is not accessible because there is an error and prompts the user to take further action to correct the error condition. Providing improved visual feedback to the user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently. In some examples, no indicator is displayed during biometric authentication.

In some examples, after ceasing to display the home affordance (e.g., 4044), the electronic device (e.g., 4000) detects a correction of the error condition that prevents the biometric sensor (e.g., 4003) from obtaining biometric information about the user of the device. In some examples, the electronic device detects the absence of the error condition subsequent to displaying the error indication (e.g., 4028) at the third location. In some examples, in response to detecting the correction of the error condition, the electronic device displays, on the display (e.g., 4002), the home affordance at the third location in the user interface (e.g., and ceases to display the error indication (e.g., 4028)).

In some examples, the electronic device (e.g., 4000) detects an input (e.g., palm, finger) at the location that is proximate to (e.g., adjacent to, near to, within a predetermined distance of) the first portion of the electronic device. In some examples, in response to detecting the input at the location that is proximate to the first portion of the electronic device, the electronic device displays, on the display, the error indication (e.g., 4028) at a different location. In some examples, the different location is a location at which the input is not detected. In some examples, prior to displaying the error indication at the new location, the electronic device determines the different location based on the location of the input with respect to the display. In some examples, the different location is proximate to the location that is proximate to the first portion of the electronic device. In some examples, the error indication is moved to the different location after being initially displayed at a first location that is proximate to the first portion of the electronic device. In some examples, the error indication is initially displayed at a location selected so as to be away from any regions of the display that are known to be occluded (e.g., occluded by a detected touch input). Displaying the error indication at a different location depending on the location of the input (e.g., a user's hand) provides the user with feedback about the current state of the device (e.g., that an error condition is preventing successful biometric authentication) and prompts the user to take further action to correct the error condition. Further, by adjusting the location, the device ensures that the error indication is visible to the user and thus, the user is more likely to take corrective action at the device. Providing improved feedback to the user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently.

In some examples, the electronic device (e.g., 4000) displays, on the display (e.g., 4002), a first transaction interface (e.g., 4014) (e.g., a transaction (or payment) interface that is separate from (or overlaid on top of) the user interface and includes transaction information such as a credit card number, billing address, etc.) at a position that is proximate to (e.g., adjacent to, near to, within a predetermined distance of) the first portion of the electronic device. In some examples, the first transaction interface is displayed in response to receiving an input (e.g., 4010) corresponding to an affordance (e.g., 4012) of the user interface (e.g., 4008) (e.g., an affordance for making a payment or completing a transaction).

In some examples, displaying the first transaction interface (e.g., 4014) includes displaying an animation of the first transaction interface transitioning (e.g., translating) from an initial position that is substantially centered with respect to the display to the position that is proximate to the first portion of the electronic device. In some examples, the animation includes displaying (e.g., maintaining the display of) the first transaction interface while the first transaction interface transitions (e.g., translates) from the initial position to the position that is proximate to the first portion of the electronic device. In some examples, the animation includes a visual effect where the first transaction interface appears to float while transitioning.

In some examples, the electronic device (e.g., 4000) displays, on the display (e.g., 4002), a prompt (e.g., 4016) to provide one or more activations of a hardware button (e.g., 4004) of the electronic device. In some examples, the electronic device prompts the user by displaying "double click for Apple Pay". In some examples, the prompt is displayed adjacent to the button. In some examples, the prompt is displayed when the device is displaying a transaction user interface region (e.g., 4014) but without receiving any indication that a transaction terminal is nearby and is requesting transaction credentials (e.g., the prompt to provide the one or more activations of the button are displayed before the device as been placed in an NFC field of an NFC reader that is requesting payment information). In some examples, the hardware button is a mechanical button or a solid state button. In some examples, the button is a switch or any other type of toggle. In some examples, the button has a fixed position relative to the electronic device, and in particular, relative to the display of the electronic device such that the electronic device may display prompts based on a position of the button. In some examples, the button is a solid-state button that operates according to capacitive and/or resistive touch, and/or is responsive to changes in the intensity of input without having a mechanical switch that is depressed to activate the button and instead monitors whether an intensity of the input is above an intensity threshold that corresponds to activation of the solid-state button. In some examples, the electronic device (e.g., 4000) receives one or more activations (e.g., 4020) of the hardware button of the electronic device, and in response to receiving the one or more activations of the hardware button, the electronic device displays, on the display (e.g., 4002), an authentication progress indicator (e.g., 4022, 4024, 4030, 4032, 4034). In some examples, displaying the authentication progress indicator includes displaying an animation of the authentication progress indicator transitioning from a location of the prompt (e.g., 4016) to a final position of the authentication progress indicator. In some examples, the authentication indicator provides a status of the authentication (e.g., in progress, successful, unsuccessful). In some examples, the animation includes displaying (e.g., maintaining the display of) the authentication progress indicator while the authentication progress indicator transitions (e.g., translates) from the location of the prompt to the final position. In some examples, the animation includes a visual effect where the authentication progress indicator appears to slide out of the prompt. In some examples, the authentication progress indicator is displayed with (or overlaid on) the user interface (e.g., 4014) (or the transaction user interface region). Prompting the user to activate a hardware button guides the user to perform an action at the device in order to complete a transaction. Prompting the user in this manner enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently. Displaying an authentication progress indicator provides feedback to the user regarding the status of the authentication. Improved feedback enhances the operability of the device and makes the user-device interface more efficient (e.g., by helping the user to provide proper inputs and reducing user mistakes when operating/interacting with the device), which, additionally, reduces power usage and improves battery life of the device by enabling the user to use the device more quickly and efficiently.

In some examples, the electronic device (e.g., 4000) concurrently displays (4122), on the display (e.g., 4002), a first application (e.g., corresponding to 4006, 4008) in a first region (e.g., 4007, 4009) and a second application (e.g., corresponding to 4006, 4008) in a second region (e.g., 4007, 4009), the second application being adjacent to (e.g., next to, proximate to, within a predetermined distance of) the first application. In some examples, the electronic device displays (4124), on the display, a second transaction interface (e.g., 4014). In some examples, the second transaction interface is the first transaction interface. In some examples, the second transaction interface is displayed overlaid on the first application and/or the second application. In some examples, in accordance (4126) with a determination that the second transaction interface corresponds to the first application, the electronic device modifies a first visual characteristic (e.g., obscure, darken, blur) of the first application. In some examples, the second transaction interface corresponds to the first application when the first application includes information about the good or service (or transaction) that is being purchased (or completed) using (or via) the second transaction interface. In some examples, this determination is made while displaying the second transaction interface. In some examples, in accordance (4130) with a determination that the second transaction interface corresponds to the second application, the electronic device (e.g., 4000) modifies a first visual characteristic (e.g., obscure, darken, blur) of the second application. In some examples, the second transaction interface corresponds to the first application when the first application includes information about the good or service (or transaction) that is being purchased (or completed) using (or via) the second transaction interface. In some examples, this determination is made while displaying the second transaction interface.

In some examples, modifying the first visual characteristic of the first application includes modifying a second visual characteristic of the second application. In some examples, modifying the second visual characteristic of the second application includes increasing darkening and/or increasing blur radius of a blur effect applied to the second application to a greater degree (or amount) than with respect to the first application. In some examples, modifying the first visual characteristic of the second application includes modifying a second visual characteristic of the first application. In some examples, modifying the second visual characteristic of the first application includes increasing darkening and/or increasing blur radius of a blur effect applied to the first application to a greater degree (or amount) than with respect to the second application. Modifying the visual characteristic of one application to a greater degree than with respect to another application provides feedback to the user as to which application is more relevant at the time. Providing improved visual feedback to the user enhances the operability of the device and makes the user-device interface more efficient (e.g., by helping the user to provide proper inputs and reducing user mistakes when operating/interacting with the device) which, additionally, reduces power usage and improves battery life of the device by enabling the user to use the device more quickly and efficiently. In some examples, no indicator is displayed during biometric authentication.

In some examples, modifying the first visual characteristic of the first application includes displaying (4128) the first application in the second region in accordance with a determination that the second region is closer (e.g., nearer) to the first portion of the electronic device (e.g., biometric sensor) than the first region. In some examples, displaying the first application in the second region includes ceasing to display the first application in the first region. In some examples, modifying the first visual characteristic of the second application includes displaying (4132) the second application in the first region in accordance with a determination that the first region is closer (e.g., nearer) to the first portion of the electronic device (e.g., biometric sensor) than the second region. In some examples, displaying the second application in the first region includes ceasing to display the second application in the second region. In some examples, the electronic device displays an animation of the first application swapping places with the second application.

In some examples, in accordance with the determination that the second transaction interface (e.g., 4014) corresponds to the first application, the second transaction interface includes an indication of the first application (e.g., the name of the first application). In some examples, in accordance with the determination that the second transaction interface corresponds to the second application, the second transaction interface includes an indication of the second application (e.g., the name of the second application).

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

As described above, one aspect of the present technology is the gathering and use of data available from various sources to improve the delivery to users of invitational content or any other content that can be of interest to them. The present disclosure contemplates that in some instances, this gathered data can include personal information data that uniquely identifies or can be used to contact or locate a specific person. Such personal information data can include demographic data, location-based data, telephone numbers, email addresses, home addresses, or any other identifying information.

The present disclosure recognizes that the use of such personal information data, in the present technology, can be used to the benefit of users. For example, the personal information data can be used to deliver targeted content that is of greater interest to the user. Accordingly, use of such personal information data enables calculated control of the delivered content. Further, other uses for personal information data that benefit the user are also contemplated by the present disclosure.

The present disclosure further contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. For example, personal information from users should be collected for legitimate and reasonable uses of the entity and not shared or sold outside of those legitimate uses. Further, such collection should occur only after receiving the informed consent of the users. Additionally, such entities would take any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of advertisement delivery services, the present technology can be configured to allow users to select to "opt in" or "opt out" of participation in the collection of personal information data during registration for services. In another example, users can select not to provide location information for targeted content delivery services. In yet another example, users can select to not provide precise location information, but permit the transfer of location zone information.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, content can be selected and delivered to users by inferring preferences based on non-personal information data or a bare minimum amount of personal information, such as the content being requested by the device associated with a user, other non-personal information available to the content delivery services, or publically available information.

## Claims

1. A method for displaying error indications in response to detecting the existence of an error condition, the method comprising: at an electronic device (4000) with a display (4002), a biometric image sensor (4003) at a first portion of the electronic device and one or more orientation sensors:
while the device is in a locked state, detecting (4102) the existence of an error condition that prevents the biometric image sensor from obtaining biometric information about a user of the device, wherein the error condition is a result of occlusion by a physical object and the physical object is in contact with the display;
in response to detecting the existence of the error condition, concurrently displaying (4104), on the display:
a first error indication (4026) in a first region of a user interface; and
a second error indication (4028), wherein the second error indication is displayed at a location that is proximate to the first portion of the electronic device, including:
in accordance with a determination that the user interface of the electronic device is in a first orientation relative to the biometric image sensor, displaying (4110) the second error indication at a first location in the user interface that is proximate to the first portion of the electronic device, wherein the first location in the user interface is different from a location where the physical object is in contact with the display; and
in accordance with a determination that the user interface of the electronic device is in a second orientation relative to the biometric image sensor, displaying (4112) the second error indication at a second location in the user interface that is proximate to the first portion of the electronic device, the first orientation being different from the second orientation, wherein the second location in the user interface is different from the location where the physical object is in contact with the display; and
after the error condition has been corrected, obtaining biometric information about a user of the device, and in response to obtaining the biometric information about the user of the device, in accordance with a determination that the biometric information matches enrolled biometric information, transitioning the device to an unlocked state and displaying an indication that the device has been transitioned to an unlocked state in the first region of the user interface.

2. The method of claim 1, wherein the second error indication includes a biometric sensor occluded icon and a reticle, the second error indication providing an indication that the biometric sensor is occluded.

3. The method of any of claims 1-2, further comprising:
while attempting to obtain biometric information using the biometric image sensor:
displaying, on the display, a first progress indicator, including:
in accordance with a determination that the user interface of the electronic device is in a third orientation relative to the biometric image sensor, the user interface in the third orientation having a first top side, displaying the first progress indicator proximate to the first top side of the user interface in the third orientation; and
in accordance with a determination that the user interface of the electronic device is in a fourth orientation relative to the biometric image sensor, the user interface in the fourth orientation having a second top side, displaying the first progress indicator proximate to the second top side of the user interface in the fourth orientation, the third orientation being different from the fourth orientation.

4. The method of any of claims 1-3, further comprising:
displaying, on the display, a second progress indicator of the electronic device, the second progress indicator being an animation with a first portion and a second portion that is different from the first portion, including:
in accordance with a determination that the second progress indicator is displayed at the location that is proximate to the first portion of the electronic device, displaying the second error indication as part of the animation subsequent to the first portion and prior to the second portion.

5. The method of any of claims 1-4, further comprising:
displaying, on the display, a home affordance at a third location in the user interface; and
in accordance with a determination that the second error indication is displayed at the third location, ceasing to display the home affordance while displaying the second error indication at the third location.

6. The method of claim 5, further comprising:
after ceasing to display the home affordance, detecting a correction of the error condition that prevents the biometric image sensor from obtaining biometric information about the user of the device; and
in response to detecting the correction of the error condition, displaying, on the display, the home affordance at the third location in the user interface.

7. The method of any of claims 1-6, further comprising:
detecting an input at the location that is proximate to the first portion of the electronic device; and
in response to detecting the input at the location that is proximate to the first portion of the electronic device, displaying, on the display, the second error indication at a different location, wherein the different location is a location at which the input is not detected.

8. The method of any of claims 1-7, further comprising:
displaying, on the display, a first transaction interface at a position that is proximate to the first portion of the electronic device.

9. The method of any of claims 1-8, further comprising:
displaying, on the display, a prompt to provide one or more activations of a hardware button of the electronic device; receiving one or more activations of the hardware button of the electronic device; and
in response to receiving the one or more activations of the hardware button, displaying, on the display, an authentication progress indicator, wherein displaying the authentication progress indicator includes displaying an animation of the authentication progress indicator transitioning from a location of the prompt to a final position of the authentication progress indicator.

10. The method of any of claims 1-9, further comprising:
concurrently displaying, on the display, a first application in a first region and a second application in a second region, the second application being adjacent to the first application;
displaying, on the display, a second transaction interface; in accordance with a determination that the second transaction interface corresponds to the first application, modifying a first visual characteristic of the first application; and
in accordance with a determination that the second transaction interface corresponds to the second application, modifying a first visual characteristic of the second application.

11. The method of claim 10, wherein:
modifying the first visual characteristic of the first application includes modifying a second visual characteristic of the second application and modifying the first visual characteristic of the second application includes modifying a second visual characteristic of the first application.

12. The method of claim 10, wherein:
modifying the first visual characteristic of the first application includes displaying the first application in the second region in accordance with a determination that the second region is closer to the first portion of the electronic device than the first region, and
modifying the first visual characteristic of the second application includes displaying the second application in the first region in accordance with a determination that the first region is closer to the first portion of the electronic device than the second region.

13. The method of claim 10, wherein, displaying the second transaction interface includes:
in accordance with the determination that the second transaction interface corresponds to the first application, the second transaction interface includes an indication of the first application, and
in accordance with the determination that the second transaction interface corresponds to the second application, the second transaction interface includes an indication of the second application.

14. A computer-readable storage medium storing one or more programs configured to be executed by one or more processors of an electronic device with a display, a biometric image sensor at a first portion of the electronic device, and one or more orientation sensors, the one or more programs including instructions for performing the method of any of claims 1-13.

15. An electronic device, comprising:
a display;
a biometric image sensor at a first portion of the electronic device;
one or more orientation sensors;
one or more processors; and
memory storing one or more programs configured to be executed by the one or more processors, the one or more programs including instructions for performing the method of any of claims 1-13.

## Patentansprüche

1. Verfahren zum Anzeigen von Fehlerangaben als Reaktion auf ein Erkennen des Vorhandenseins einer Fehlerbedingung, das Verfahren umfassend: an einer elektronischen Vorrichtung (4000) mit einer Anzeige (4002), einen biometrischen Bildsensor (4003) an einem ersten Abschnitt der elektronischen Vorrichtung und einen oder mehrere Ausrichtungssensoren:
während die Vorrichtung in einem gesperrten Zustand ist, Erkennen (4102) des Vorhandenseins einer Fehlerbedingung, die verhindert, dass der biometrische Bildsensor biometrische Informationen über einen Benutzer der Vorrichtung erhält, wobei die Fehlerbedingung ein Ergebnis einer Verdeckung durch ein physisches Objekt ist und das physische Objekt in Berührung mit der Anzeige ist;
als Reaktion auf das Erkennen des Vorhandenseins der Fehlerbedingung, gleichzeitiges Anzeigen (4104), auf der Anzeige:
einer ersten Fehlerangabe (4026) in einer ersten Region einer Benutzerschnittstelle; und
einer zweiten Fehlerangabe (4028), wobei die zweite Fehlerangabe an einer Stelle angezeigt wird, die nahe dem ersten Abschnitt der elektronischen Vorrichtung liegt, einschließlich:
gemäß einer Bestimmung, dass die Benutzerschnittstelle der elektronischen Vorrichtung in einer ersten Ausrichtung relativ zu dem biometrischen Bildsensor ist, Anzeigen (4110) der zweiten Fehlerangabe an einer ersten Stelle in der Benutzerschnittstelle, die nahe dem ersten Abschnitt der elektronischen Vorrichtung liegt, wobei sich die erste Stelle in der Benutzerschnittstelle von einer Stelle unterscheidet, an der das physische Objekt mit der Anzeige in Berührung ist; und
gemäß einer Bestimmung, dass die Benutzerschnittstelle der elektronischen Vorrichtung in einer zweiten Ausrichtung relativ zu dem biometrischen Bildsensor ist, Anzeigen (4112) der zweiten Fehlerangabe an einer zweiten Stelle in der Benutzerschnittstelle, die nahe dem ersten Abschnitt der elektronischen Vorrichtung liegt, wobei sich die erste Ausrichtung von der zweiten Ausrichtung unterscheidet, wobei sich die zweite Stelle in der Benutzerschnittstelle von der Stelle unterscheidet, an der das physische Objekt mit der Anzeige in Berührung ist; und
nachdem die Fehlerbedingung korrigiert wurde, Erhalten biometrischer Informationen über einen Benutzer der Vorrichtung und als Reaktion auf das Erhalten der biometrischen Informationen über den Benutzer der Vorrichtung, gemäß einer Bestimmung, dass die biometrischen Informationen mit registrierten biometrischen Informationen übereinstimmen, Übergang der Vorrichtung in einen entsperrten Zustand und Anzeigen einer Angabe, dass die Vorrichtung in einen entsperrten Zustand in der ersten Region der Benutzerschnittstelle übergegangen ist.

2. Verfahren nach Anspruch 1, wobei die zweite Fehlerangabe ein Verdeckt-Icon für den biometrischen Sensor und ein Retikel einschließt, wobei die zweite Fehlerangabe eine Angabe, dass der biometrische Sensor verdeckt ist, bereitstellt.

3. Verfahren nach einem der Ansprüche 1 bis 2, ferner umfassend:
während des Versuchens, biometrische Informationen unter Verwendung des biometrischen Bildsensors zu erhalten:
Anzeigen, auf der Anzeige, eines ersten Fortschrittsanzeigers, einschließlich:
gemäß einer Bestimmung, dass die Benutzerschnittstelle der elektronischen Vorrichtung in einer dritten Ausrichtung relativ zu dem biometrischen Bildsensor ist, wobei die Benutzerschnittstelle in der dritten Ausrichtung eine erste Oberseite aufweist, die den ersten Fortschrittsanzeigers nahe der ersten Oberseite der Benutzerschnittstelle in der dritten Orientierung anzeigt; und
gemäß einer Bestimmung, dass die Benutzerschnittstelle der elektronischen Vorrichtung in einer vierten Ausrichtung relativ zu dem biometrischen Bildsensor ist, wobei die Benutzerschnittstelle in der vierten Ausrichtung eine erste Oberseite aufweist, die den ersten Fortschrittsanzeigers nahe der zweiten Oberseite der Benutzerschnittstelle in der vierten Orientierung anzeigt, wobei sich die dritte Ausrichtung von der vierten Ausrichtung unterscheidet.

4. Verfahren nach einem der Ansprüche 1 bis 3, ferner umfassend:
Anzeigen, auf der Anzeige, eines zweiten Fortschrittsanzeigers der elektronischen Vorrichtung, wobei der zweite Fortschrittsanzeiger eine Animation mit einem ersten Abschnitt und einem zweiten Abschnitt ist, der sich von dem ersten Abschnitt unterscheidet, einschließlich:
gemäß einer Bestimmung, dass der zweite Fortschrittsindikator an der Stelle angezeigt wird, die nahe dem ersten Abschnitt der elektronischen Vorrichtung liegt, Anzeigen der zweiten Fehlerangabe als Teil der Animation im Anschluss an den ersten Abschnitt und vor dem zweiten Abschnitt.

5. Verfahren nach einem der Ansprüche 1 bis 4, ferner umfassend:
Anzeigen, auf der Anzeige, einer Home-Affordance an einer dritten Stelle in der Benutzerschnittstelle; und
gemäß einer Bestimmung, dass die zweite Fehlerangabe an der dritten Stelle angezeigt wird, beenden, die Home-Affordance anzuzeigen, während des Anzeigens der zweiten Fehlerangabe an der dritten Stelle.

6. Verfahren nach Anspruch 5, ferner umfassend:
nach dem Beenden, die Home-Affordance anzuzeigen, Erkennen einer Korrektur der Fehlerbedingung, die verhindert, dass der biometrische Bildsensor biometrische Informationen über den Benutzer der Vorrichtung erhält; und
als Reaktion auf das Erkennen der Korrektur der Fehlerbedingung, Anzeigen, auf der Anzeige, der Home-Affordance an der dritten Stelle in der Benutzerschnittstelle.

7. Verfahren nach einem der Ansprüche 1 bis 6, ferner umfassend:
Erkennen einer Eingabe an der Stelle, die nahe dem ersten Abschnitt der elektronischen Vorrichtung liegt; und
als Reaktion auf das Erkennen der Eingabe an der Stelle, die nahe dem ersten Abschnitt der elektronischen Vorrichtung liegt, Anzeigen, auf der Anzeige, der zweiten Fehlerangabe an einer unterschiedlichen Stelle, wobei die unterschiedliche Stelle eine Stelle ist, an der die Eingabe nicht erkannt wird.

8. Verfahren nach einem der Ansprüche 1 bis 7, ferner umfassend:
Anzeigen, auf der Anzeige, einer ersten Transaktionsschnittstelle an einer Position, die nahe dem ersten Abschnitt der elektronischen Vorrichtung ist.

9. Verfahren nach einem der Ansprüche 1 bis 8, ferner umfassend:
Anzeigen, auf der Anzeige, einer Aufforderung, eine oder mehrere Aktivierungen einer Hardware-Schaltfläche der elektronischen Vorrichtung bereitzustellen; Empfangen einer oder mehrerer Aktivierungen der Hardware-Schaltfläche der elektronischen Vorrichtung; und
als Reaktion auf das Empfangen der einen oder der mehreren Aktivierungen der Hardware-Schaltfläche, Anzeigen, auf der Anzeige, eines Authentifizierungsfortschrittsanzeigers, wobei das Anzeigen des Authentifizierungsfortschrittsanzeigers das Anzeigen einer Animation des Authentifizierungsfortschrittsanzeigers einschließt, der von einer Stelle der Aufforderung zu einer endgültigen Position des Authentifizierungsfortschrittsanzeigers übergeht.

10. Verfahren nach einem der Ansprüche 1 bis 9, ferner umfassend:
gleichzeitiges Anzeigen, auf der Anzeige, einer ersten Anwendung in einer ersten Region und einer zweiten Anwendung in einer zweiten Region, wobei die zweite Anwendung an die erste Anwendung angrenzt;
Anzeigen, auf der Anzeige, einer zweiten Transaktionsschnittstelle; gemäß einer Bestimmung, dass die zweite Transaktionsschnittstelle der ersten Anwendung entspricht, Modifizieren eines ersten visuellen Kennzeichens der ersten Anwendung; und
gemäß einer Bestimmung, dass die zweite Transaktionsschnittstelle der zweiten Anwendung entspricht, Modifizieren eines zweiten visuellen Kennzeichens der ersten Anwendung.

11. Verfahren nach Anspruch 10, wobei:
das Modifizieren des ersten visuellen Kennzeichens der ersten Anwendung das Modifizieren eines zweiten visuellen Kennzeichens der zweiten Anwendung einschließt, und das Modifizieren des ersten visuellen Kennzeichens der zweiten Anwendung, das Modifizieren eines zweiten visuellen Kennzeichens der ersten Anwendung einschließt.

12. Verfahren nach Anspruch 10, wobei:
das Modifizieren des ersten visuellen Kennzeichens der ersten Anwendung das Anzeigen der ersten Anwendung in der zweiten Region gemäß einer Bestimmung einschließt, dass die zweite Region näher an dem ersten Abschnitt der elektronischen Vorrichtung liegt als die erste Region, und
wobei das Modifizieren des ersten visuellen Kennzeichens der zweiten Anwendung das Anzeigen der zweiten Anwendung in der ersten Region gemäß einer Bestimmung einschließt, dass die erste Region näher an dem ersten Abschnitt der elektronischen Vorrichtung als die zweite Region liegt.

13. Verfahren nach Anspruch 10, wobei das Anzeigen der zweiten Transaktionsschnittstelle einschließt:
gemäß der Bestimmung, dass die zweite Transaktionsschnittstelle der ersten Anwendung entspricht, die zweite Transaktionsschnittstelle eine Angabe der ersten Anwendung einschließt, und
gemäß der Bestimmung, dass die zweite Transaktionsschnittstelle der zweiten Anwendung entspricht, die zweite Transaktionsschnittstelle eine Angabe der zweiten Anwendung einschließt.

14. Computerlesbares Speichermedium, das ein oder mehrere Programme speichert, die konfiguriert sind, um durch einen oder mehrere Prozessoren einer elektronischen Vorrichtung mit einer Anzeige, einem biometrischen Bildsensor eines ersten Abschnitts der elektronischen Vorrichtung und einem oder mehreren Ausrichtungssensoren ausgeführt zu werden, wobei das eine oder die mehreren Programme Anweisungen zum Durchführen des Verfahrens nach einem der Ansprüche 1 bis 13 einschließen.

15. Elektronische Vorrichtung, umfassend:
eine Anzeige;
einen biometrischen Bildsensor an einem ersten Abschnitt der elektronischen Vorrichtung;
einen oder mehrere Ausrichtungssensoren;
einen oder mehrere Prozessoren; und
einen Speicher, der ein oder mehrere Programme speichert, die konfiguriert sind, um durch den einen oder die mehreren Prozessoren ausgeführt zu werden, wobei das eine oder die mehreren Programme Anweisungen zum Durchführen des Verfahrens nach einem der Ansprüche 1 bis 13 einschließen.

## Revendications

1. Procédé permettant d'afficher des indications d'erreur en réponse à la détection de l'existence d'une condition d'erreur, le procédé comprenant : au niveau d'un dispositif électronique (4000) avec un affichage (4002), un capteur d'image biométrique (4003) au niveau d'une première partie du dispositif électronique et un ou plusieurs capteurs d'orientation :
alors que le dispositif est dans un état verrouillé, la détection (4102) de l'existence d'une condition d'erreur qui empêche le capteur d'image biométrique d'obtenir des informations biométriques concernant un utilisateur du dispositif, dans lequel la condition d'erreur est un résultat d'une obstruction par un objet physique et l'objet physique est en contact avec l'affichage ;
en réponse à la détection de l'existence de la condition d'erreur, le fait d'afficher simultanément (4104), sur l'affichage :
une première indication d'erreur (4026) dans une première région d'une interface utilisateur ; et
une seconde indication d'erreur (4028), la seconde indication d'erreur étant affichée au niveau d'un emplacement qui est à proximité de la première partie du dispositif électronique, comportant :
conformément à une détermination que l'interface utilisateur du dispositif électronique est dans une première orientation par rapport au capteur d'image biométrique, le fait d'afficher (4110) la seconde indication d'erreur au niveau d'un premier emplacement dans l'interface utilisateur qui est à proximité de la première partie du dispositif électronique, le premier emplacement dans l'interface utilisateur étant différent d'un emplacement où l'objet physique est en contact avec l'affichage ; et
conformément à une détermination que l'interface utilisateur du dispositif électronique est dans une deuxième orientation par rapport au capteur d'image biométrique, le fait d'afficher (4112) la seconde indication d'erreur au niveau d'un deuxième emplacement dans l'interface utilisateur qui est à proximité de la première partie du dispositif électronique, la première orientation étant différente de la deuxième orientation, dans lequel le deuxième emplacement dans l'interface utilisateur est différent de l'emplacement-= où l'objet physique est en contact avec l'affichage ; et
après que la condition d'erreur a été corrigée, l'obtention d'informations biométriques concernant un utilisateur du dispositif, et en réponse à l'obtention des informations biométriques concernant l'utilisateur du dispositif, conformément à une détermination que les informations biométriques concordent avec des informations biométriques enregistrées, la transition du dispositif à un état déverrouillé et l'affichage d'une indication que le dispositif a effectué une transition à un état déverrouillé dans la première région de l'interface utilisateur.

2. Procédé selon la revendication 1, dans lequel la seconde indication d'erreur comporte une icône d'obstruction de capteur biométrique et un réticule, la seconde indication d'erreur fournissant une indication que le capteur biométrique est obstrué.

3. Procédé selon l'une quelconque des revendications 1 à 2, comprenant en outre :
tout en tentant d'obtenir des informations biométriques à l'aide du capteur d'image biométrique :
le fait d'afficher, sur l'affichage, un premier indicateur de progression, incluant :
conformément à une détermination que l'interface utilisateur du dispositif électronique est dans une troisième orientation par rapport au capteur d'image biométrique, l'interface utilisateur dans la troisième orientation ayant un premier côté supérieur, l'affichage du premier indicateur de progression à proximité du premier côté supérieur de l'interface utilisateur dans la troisième orientation ; et
conformément à une détermination que l'interface utilisateur du dispositif électronique est dans une quatrième orientation par rapport au capteur d'image biométrique, l'interface utilisateur dans la quatrième orientation ayant un second côté supérieur, l'affichage du premier indicateur de progression à proximité du second côté supérieur de l'interface utilisateur dans la quatrième orientation, la troisième orientation étant différente de la quatrième orientation.

4. Procédé selon l'une quelconque des revendications 1 à 3, comprenant en outre :
le fait d'afficher, sur l'affichage, un second indicateur de progression du dispositif électronique, le second indicateur de progression étant une animation avec une première partie et une seconde partie qui est différente de la première partie, incluant :
conformément à une détermination que le second indicateur de progression est affiché au niveau de l'emplacement qui est à proximité de la première partie du dispositif électronique, l'affichage de la seconde indication d'erreur dans le cadre de l'animation à la suite de la première partie et avant la seconde partie.

5. Procédé selon l'une quelconque des revendications 1 à 4, comprenant en outre:
le fait d'afficher, sur l'affichage, une affordance d'accueil au niveau d'un troisième emplacement dans l'interface utilisateur ; et
conformément à une détermination que la seconde indication d'erreur est affichée au niveau du troisième emplacement, l'arrêt de l'affichage de l'affordance d'accueil tout en affichant la seconde indication d'erreur au niveau du troisième emplacement.

6. Procédé selon la revendication 5, comprenant en outre :
après l'arrêt de l'affichage de l'affordance d'accueil, la détection d'une correction de la condition d'erreur qui empêche le capteur d'image biométrique d'obtenir des informations biométriques concernant l'utilisateur du dispositif ; et
en réponse à la détection de la correction de la condition d'erreur, le fait d'afficher, sur l'affichage, l'affordance d'accueil au niveau du troisième emplacement dans l'interface utilisateur.

7. Procédé selon l'une quelconque des revendications 1 à 6, comprenant en outre :
la détection d'une entrée au niveau de l'emplacement qui est à proximité de la première partie du dispositif électronique ; et
en réponse à la détection de l'entrée au niveau de l'emplacement qui est à proximité de la première partie du dispositif électronique, le fait d'afficher, sur l'affichage, la seconde indication d'erreur au niveau d'un emplacement différent, l'emplacement différent étant un emplacement au niveau duquel l'entrée n'est pas détectée.

8. Procédé selon l'une quelconque des revendications 1 à 7, comprenant en outre :
le fait d'afficher, sur l'affichage, une première interface de transaction au niveau d'une position qui est à proximité de la première partie du dispositif électronique.

9. Procédé selon l'une quelconque des revendications 1 à 8, comprenant en outre :
le fait d'afficher, sur l'affichage, une invitation à fournir une ou plusieurs activations d'un bouton matériel du dispositif électronique ; la réception d'une ou plusieurs activations du bouton matériel du dispositif électronique ; et
en réponse à la réception de la ou des activations du bouton matériel, le fait d'afficher, sur l'affichage, un indicateur de progression d'authentification, l'affichage de l'indicateur de progression d'authentification incluant l'affichage d'une animation de l'indicateur de progression d'authentification effectuant une transition depuis un emplacement de l'invitation jusqu'à une position finale de l'indicateur de progression d'authentification.

10. Procédé selon l'une quelconque des revendications 1 à 9, comprenant en outre :
le fait d'afficher simultanément, sur l'affichage, une première application dans une première région et une seconde application dans une seconde région, la seconde application étant adjacente à la première application ;
le fait d'afficher, sur l'affichage, une seconde interface de transaction ;
conformément à une détermination que la seconde interface de transaction correspond à la première application, la modification d'une première caractéristique visuelle de la première application ; et
conformément à une détermination que la seconde interface de transaction correspond à la seconde application, la modification d'une première caractéristique visuelle de la seconde application.

11. Procédé selon la revendication 10, dans lequel :
la modification de la première caractéristique visuelle de la première application inclut la modification d'une seconde caractéristique visuelle de la seconde application et la modification de la première caractéristique visuelle de la seconde application inclut la modification d'une seconde caractéristique visuelle de la première application.

12. Procédé selon la revendication 10, dans lequel :
la modification de la première caractéristique visuelle de la première application inclut l'affichage de la première application dans la seconde région conformément à une détermination que la seconde région est plus près de la première partie du dispositif électronique que la première région, et
la modification de la première caractéristique visuelle de la seconde application inclut l'affichage de la seconde application dans la première région conformément à une détermination que la première région est plus près de la première partie du dispositif électronique que la seconde région.

13. Procédé selon la revendication 10, dans lequel, l'affichage de la seconde interface de transaction inclut :
conformément à la détermination que la seconde interface de transaction correspond à la première application, la seconde interface de transaction inclut une indication de la première application, et
conformément à la détermination que la seconde interface de transaction correspond à la seconde application, la seconde interface de transaction inclut une indication de la seconde application.

14. Support de stockage lisible par ordinateur stockant un ou plusieurs programmes configurés pour être exécutés par un ou plusieurs processeurs d'un dispositif électronique avec un affichage, un capteur d'image biométrique au niveau d'une première partie du dispositif électronique, et un ou plusieurs capteurs d'orientation, le ou les programmes incluant des instructions destinées à mettre en oeuvre le procédé selon l'une quelconque des revendications 1 à 13.

15. Dispositif électronique, comprenant :
un affichage ;
un capteur d'image biométrique au niveau d'une première partie du dispositif électronique;
un ou plusieurs capteurs d'orientation ;
un ou plusieurs processeurs ; et
de la mémoire stockant un ou plusieurs programmes configurés pour être exécutés par le ou les processeurs, le ou les programmes incluant des instructions destinées à mettre en oeuvre le procédé selon l'une quelconque des revendications 1 à 13.
